# EUROPÄISCHE PATENTSCHRIFT

(11) **EP 1 631 620 B1**
(45) Veröffentlichungstag und Bekanntmachung des Hinweises auf die Patenterteilung: **30.08.2017**
(21) Anmeldenummer: 04739339.2
(22) Anmeldetag: 25.05.2004
(51) Int. Cl.: C08K 9/00

(54) **ZUSAMMENSETZUNG MIT NICHTNEWTONSCHEM VERHALTEN**
COMPOSITION HAVING A NON-NEWTONIAN BEHAVIOR
COMPOSITION A COMPORTEMENT NON-NEWTONIEN

(30) Priorität: 26.05.2003 DE 10323729
(43) Veröffentlichungstag der Anmeldung: 08.03.2006
(73) Patentinhaber: Leibniz-Institut für Neue Materialien gemeinnützige GmbH, 66123 Saarbrücken (DE)
(72) Erfinder: MENNIG, Martin, 66287 Quierschied (DE); DE OLIVEIRA, Peter, William, 66123 Saarbrücken (DE); SCHMIDT, Helmut, 66130 Saarbrücken-Güdingen (DE)
(74) Vertreter: Patentanwälte Gierlich & Pischitzis Partnerschaft mbB
(86) Internationale Anmeldenummer: PCT/EP2004/005619
(87) Internationale Veröffentlichungsnummer: WO 2004/104082

(56) Entgegenhaltungen:
- EP-A- 1 038 834
- Linsinger T ET AL: "JRC Reference Reports, Requirements on measurements for the implementation of the European Commision definition of the term nanomaterial", , 1 July 2012 (2012-07-01), pages 1-52, XP55113112, ISBN: 978927925602 Retrieved from the Internet: URL:http://publications.jrc.ec.europa.eu/r epository/bitstream/111111111/26399/2/irmm _nanomaterials (online).pdf [retrieved on 2014-04-09]

## Beschreibung

Die vorliegende Erfindung betrifft eine Zusammensetzung mit nichtnewtonschem Verhalten, ein Verfahren zu deren Herstellung, mit den Zusammensetzungen erhältliche beschichtete Substrate sowie die Verwendung dieser beschichteten Substrate.

Es ist allgemein bekannt, dass man durch Zugabe von Feststoffteilchen die Rheologie von Beschichtungslösungen beeinflussen kann. Dies wird beispielsweise bei Wandfarben genutzt, die über Pigmente oder andere Partikel (z. B. Aerosil) strukturviskos eingestellt werden, damit sie nicht tropfen und keine Nasen laufen. Ähnliche Effekte sind auch für Nanokomposite, die nanoskalige Feststoffteilchen enthalten, bekannt. Dabei gilt die allgemeine Regel, dass man die Rheologie umso stärker beeinflussen kann, je höher der Gehalt an Partikeln ist. Es ist aber nicht immer möglich oder von Nachteil, entsprechend hohe Partikelkonzentrationen einzusetzen, Beispielsweise wird der Kompositwerkstoff dadurch zu spröde oder zu teuer oder hohe Partikelgehalte können auf Grund der Partikeleigenschaften selbst zu unerwünschten Nebeneffekten fuhren. Es besteht daher Bedarf nach einem von der Partikelkonzentration unabhängigen Werkzeug zur Einstellung der Rheologie.

Diese Aufgabe kann man erstaunlicherweise lösen, indem man in nanopartikulären Dispersionen, die z.B. ein Sol darstellen können, gezielt die Oberflächenladung der Partikel variiert. Dementsprechend stellt die vorliegende Erfindung eine Zusammensetzung mit nichtnewtonschem Verhalten bereit, die einen Matrixbildner mit einer bestimmten Viskosität, z.B. ein Bindemittel, und nanoskalige Feststoffteilchen, die bevorzugt anorganisch sind, umfasst, wobei die Oberflächenladung der Teilchen durch die Zugabe einer Säure oder Base erhöht worden ist. Genauso können die Partikel vorher mit Oberflächengruppen, die vorzugsweise protisch sind, modifiziert werden, die mit einer Säure oder Base nach Maßgabe der Säure-/Basenkonzentration Ladungen bilden oder ändern können. Bei der Zusammensetzung kann es sich z.B. um eine Masse oder ein Fluid handeln. Ferner betrifft die Erfindung ein Verfahren zur Herstellung einer Zusammensetzung umfassend einen Matrixbildner und nanoskalige Feststoffteilchen, bei dem die Feststoffteilchen oder ein Sol der Feststoffteilchen mit dem z.B. löslichen, flüssigen oder gelösten Matrixbildner und gegebenenfalls einem Lösungsmittel gemischt werden, um, gegebenenfalls nach teilweiser oder vollständiger Entfernung des Lösungsmittels, eine Zusammensetzung mit richtnewtonschem Verhalten zu erhalten, wobei das Verfahren dadurch gekennzeichnet ist, dass die Oberflächenladung der Teilchen durch Zugabe einer Base oder einer Säure erhöht wird.

Ohne sich an eine Theorie binden zu wollen, wird angenommen, dass man das Phänomen der Modifizierung der Rheologie dadurch erklären kann; dass durch die pH-Änderung die Oberflächenladung der Partikel und damit das Zetapotentials der Partikel verändert werden. Dadurch werden die Wechselwirkungskräfte zwischen den Partikeln beeinflusst bzw. in die gewünschte Richtung gelenkt, wodurch die Rheologie der Zusammensetzung beeinflusst wird. Durch die außerordentlich kleinen Abmessungen der eingesetzten nanoskaligen Feststoffteilchen (Nanopartikel) sind die mittleren interpartikulären Abstände zwischen ihnen bei gegebenem Volumenanteil vergleichsweise klein, so dass sich z.B. die Coulomb-Wechselwirkung aber auch andere, wie z.B. Wasserstoffbrückenbindungen, deutlich bemerkbar machen.

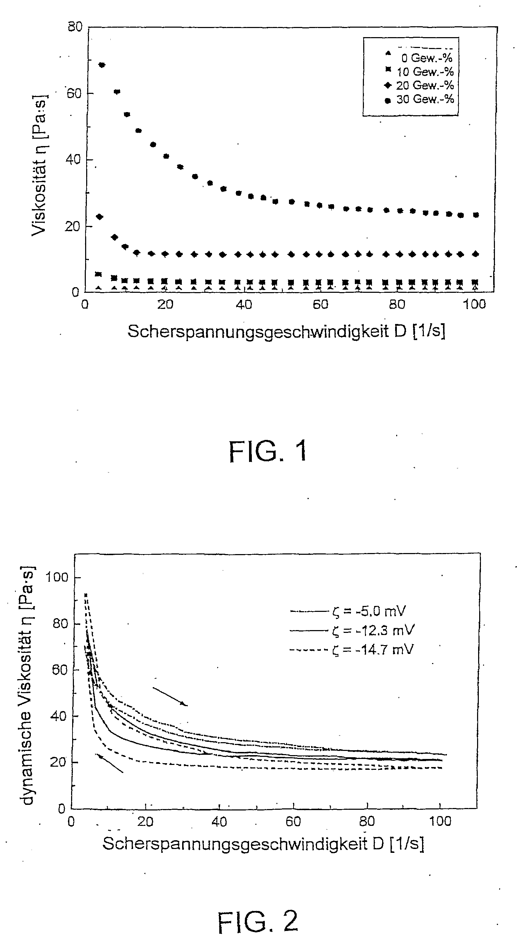

Die vorteilhafte Beeinflussung der Rheologie solcher Zusammensetzungen durch die erfindungsgemäße Erhöhung der Oberflächenladung ergibt sich auch aus den nachstehend erläuterten Vergleichsversuchen, die in den Figuren 1 und 2 veranschaulicht sind. Daraus ergibt sich, dass die Zugabe von Base oder Säure zur Erhöhung der Oberflächenladung (und damit des Zetapotentials) einen starken Einfluss auf das rheologische Verhalten der Zusammensetzung hat. Die Erhöhung ist selbstverständlich auf die Absolutbeträge der Oberflächenladungen bezogen, wie im folgenden ausführlicher erläutert wird.

Gegenüber den Zusammensetzungen nach dem Stand der Technik (Figur 1) ergibt sich bei den erfindungsgemäßen Zusammensetzungen (Figur 2) durch die Erhöhung der Oberflächenladung insbesondere eine Verkürzung der Relaxationszeit der Viskosität, die bei abnehmender Schergeschwindigkeit, die z.B. bei Präge- oder Druckverfahren von besonderer Bedeutung ist, noch stärker ausgeprägt ist. Bei nichtnewtonschen Beschichtungen sind kurze Relaxationszeiten der Viskosität in der Regel von Vorteil, da längere Relaxationszeiten zu einer schnelleren Glättung der Strukturen und damit zu einem leichteren Verfließen oder einer Verschlechterung der Abformtreue führen.

Zusammensetzungen mit nichtnewtonschem Verhalten und Maßnahmen zu ihrer Herstellung sind dem Fachmann geläufig. Nichtnewtonsche Materialien zeigen z.B. beim Fließen kein idealviskoses Verhalten. Bevorzugt handelt es sich bei den erfindungsgemäßen Zusammensetzungen mit nichtnewtonschem Verhalten um solche, die strukturviskos oder thixotrop sind. Wenn die Zusammensetzung in eine nichtnewtonsche Zusammensetzung überführt wurde, kann sie häufig in Form eines Gels vorliegen.

Die Zusammensetzung umfasst eine matrixbildende Komponente. Bei dem Matrixbildner kann es sich z.B. um ein Bindemittel handeln. Als Matrixbildner oder Bindemittel können die dem Fachmann geläufigen eingesetzt werden, wie sie z.B. für Anstrichstoffe oder Lacke Verwendung finden. Es handelt sich z.B. um Matrixbildner bzw. Bindemittel auf Basis von organischen Polymeren oder von anorganischen oder organisch modifizierten anorganischen Polykondensaten oder um Kombinationen davon. Der Matrixbildner kann auch in Form der Vorstufen der organischen Polymere oder der anorganischen oder organisch modifizierten anorganischen Polykondensate eingesetzt werden. Der Matrixbildner bzw. das Bindemittel ist vorzugsweise vernetzbar, d.h. es besitzt funktionelle Gruppen, über die eine Vernetzung möglich ist. Der Matrixbildner oder das Bindemittel bilden die Matrix, in der die Nanopartikel enthalten sind. Solche Systeme werden als Nanokomposite bezeichnet. Neben den Nanopartikeln, die bezüglich der Zugabe von Säure oder Base die Rheologie beeinflussen, können selbstverständlich auch in dieser Beziehung inerte Nanopartikel enthalten sein, die später erläutert werden.

Als Matrixbildner oder Bindemittel können dem Fachmann bekannte organische Polymere eingesetzt werden, z. B. Polyacrylsäure, Polymethacrylsäure, Polyacrylate, Polymethacrylate, Polyolefine, z.B. Polybutadien, Polystyrol, Polyamide, Polyimide, Polyvinylverbindungen, wie Polyvinylchlorid, Polyvinylalkohol, Polyvinylbutyral, Polyvinylacetat und entsprechende Copolymere, z. B. Poly(ethylenvinylacetat), Polyester, z. B. Polyethylenterephthalat oder Polydiallylphthalat, Polyarylate, Polycarbonate, Polyether, z. B. Polyoxymethylen, Polyethylenoxid oder Polyphenylenoxid, Polyetherketone, Polysulfone, Polyepoxide und Fluorpolymere, z. B. Polytetrafluorethylen. Es können auch Vorstufen davon verwendet werden. Bevorzugt sind funktionelle Gruppen enthalten, über die eine Vernetzung möglich ist.

Matrixbildner oder Bindemittel auf Basis rein anorganischer Polykondensate können aus hydrolysierbaren Ausgangsverbindungen, insbesondere Metallalkoxiden oder Alkoxysilanen, gebildet werden. Beispiele für einsetzbare hydrolysierbare Ausgangsverbindungen und Verfahren zur Herstellung werden im folgenden angegeben.

Besonders gute Ergebnisse werden mit Matrixbildnern auf Basis von organisch modifizierten anorganischen Polykondensaten (Ormoceren), bevorzugt Polyorganosiloxanen, oder deren Vorstufen erhalten. Eine weitere Verbesserung lässt sich erzielen, wenn die organisch modifizierten anorganischen Polykondensate oder Vorstufen davon organische Reste mit funktionellen Gruppen enthalten, über die eine Vernetzung möglich ist. Bindemittel auf Basis organisch modifizierter anorganischer Polykondensate, die sich für die vorliegende Erfindung eignen, sind z.B. in DE 19613645, WO 92/21729 und WO 98/51747 beschrieben, worauf Bezug genommen wird. Diese Bestandteile werden im folgenden im einzelnen erläutert.

Die Herstellung der organisch modifizierten anorganischen Polykondensate oder der Vorstufen davon erfolgt insbesondere durch Hydrolyse und Kondensation von hydrolysierbaren Ausgangsverbindungen nach dem bekannten Sol-Gel-Verfahren. Unter Vorstufen werden dabei insbesondere Vorhydrolysate und/oder Vorkondensate mit geringerem Kondensationsgrad verstanden. Bei den hydrolysierbaren Ausgangsverbindungen handelt es sich um Elementverbindungen mit hydrolysierbaren Gruppen, wobei zumindest ein Teil dieser Verbindungen auch nicht hydrolysierbare Gruppen umfasst, oder Oligomere davon. Bevorzugt enthalten mindestens 50 Mol-% und besonders bevorzugt mindestens 80 Mol-% der eingesetzten hydrolysierbaren Ausgangsverbindungen mindestens eine nicht hydrolysierbare Gruppe.

Bei den zur Herstellung der organisch modifizierten anorganischen Polykondensate oder deren Vorstufen verwendeten hydrolysierbaren Ausgangsverbindungen handelt es sich insbesondere um Verbindungen mindestens eines Elements M aus den Hauptgruppen III, IV und V und/oder den Nebengruppen II bis V des Periodensystems der Elemente. Bei dem Element handelt es sich bevorzugt um ein Metall, das hier auch Si und B einschließt. Vorzugsweise handelt es sich um hydrolysierbare Verbindungen von Si, Al, B, Sn, Ti, Zr, V oder Zn, insbesondere solche von Si, Al, Ti oder Zr, oder Mischungen von zwei oder mehr dieser Elemente. Hierzu sei angemerkt, dass selbstverständlich auch andere hydrolysierbare Verbindungen einge-, setzt werden können, insbesondere solche von Metallen der Hauptgruppen I und II des Periodensystems (z.B. Na, K, Ca und Mg) und der Nebengruppen VI bis VIII des Periodensystems (z.B. Mn, Cr, Fe und Ni). Auch hydrolysierbare Verbindungen der Lanthaniden können eingesetzt werden. Vorzugsweise machen die soeben genannten Verbindungen aber nicht mehr als 40 und insbesondere nicht mehr als 20 Mol-% der insgesamt eingesetzten hydrolysierbaren monomeren Verbindungen aus.

Als hydrolysierbare Ausgangsverbindung, die mindestens eine nicht hydrolysierbare Gruppe aufweist, werden bevorzugt hydrolysierbare Organosilane oder Oligomere davon eingesetzt. Dementsprechend werden im folgenden einsetzbare Organosilane näher erläutert. Entsprechende hydrolysierbare Ausgangsverbindungen anderer oben genannter Elemente leiten sich analog aus den nachstehend aufgeführten hydrolysierbaren und nicht hydrolysierbaren Resten ab, wobei gegebenenfalls die unterschiedliche Valenz der Elemente zu berücksichtigen ist.

Ein bevorzugter Matrixbildner umfasst ein z.B. nach dem Sol-Gel-Verfahren erhältliches Polykondensat oder Vorstufen davon auf Basis von einem oder mehreren Silanen der allgemeinen Formel RₐSiX₍₄₋ₐ₎ (I), worin die Reste R gleich oder verschieden sind und nicht hydrolysierbare Gruppen darstellen, die Reste X gleich oder verschieden sind und hydrolysierbare Gruppen oder Hydroxylgruppen bedeuten und a 1, 2 oder 3, bevorzugt 1, ist, oder einem davon abgeleiteten Oligomer.

In der allgemeinen Formel (I) sind die hydrolysierbaren Gruppen X, die gleich oder voneinander verschieden sein können, beispielsweise Wasserstoff oder Halogen (F, Cl, Br oder I), Alkoxy (vorzugsweise C₁₋₆-Alkoxy, wie z.B. Methoxy, Ethoxy, n-Propoxy, i-Propoxy und Butoxy), Aryloxy (vorzugsweise C₆₋₁-Aryloxy, wie z.B. Phenoxy), Acyloxy (vorzugsweise C₁₋₆-Acyloxy, wie z.B. Acetoxy oder Propionyloxy), Alkylcarbonyl (vorzugsweise C₂₋₇-Alkylcarbonyl, wie z.B. Acetyl), Amino, Monoalkylamino oder Dialkylamino mit vorzugsweise 1 bis 12, insbesondere 1 bis 6 Kohlenstoffatomen. Bevorzugte hydrolysierbare Reste sind Halogen, Alkoxygruppen und Acyloxygruppen. Besonders bevorzugte hydrolysierbare Reste sind C₁₋₄-Alkoxygruppen, insbesondere Methoxy und Ethoxy.

Bei den nicht hydrolysierbaren Resten R, die gleich oder voneinander verschieden sein können, kann es sich um nicht hydrolysierbare Reste R mit einer funktionellen Gruppe, über die eine Vernetzung möglich ist, oder um nicht hydrolysierbare Reste R ohne eine funktionelle Gruppe handeln.

Der nicht hydrolysierbare Rest R ohne funktionelle Gruppe ist beispielsweise Alkyl (vorzugsweise C₁₋₈-Alkyl, wie Methyl, Ethyl, n-Propyl, Isopropyl, n-Butyl, s-Butyl und tert.-Butyl, Pentyl, Hexyl, Octyl oder Cyclohexyl), Aryl (vorzugsweise C₆₋₁-Aryl, wie z.B. Phenyl und Naphthyl) sowie entsprechende Alkylaryle und Arylalkyle. Die Reste R und X können gegebenenfalls einen oder mehrere übliche Substituenten, wie z.B. Halogen oder Alkoxy, aufweisen.

Spezielle Beispiele für funktionelle Gruppen, über die eine Vernetzung möglich ist, sind z.B. die Epoxid-, Hydroxy-, Ether-, Amino-, Monoalkylamino-, Dialkylamino-, gegebenenfalls substituierte Anilino-, Amid-, Carboxy-, Vinyl-, Allyl-, Alkenyl-, Acryl-, Acryloxy-, Methacryl.-, Methacryloxy-, Mercapto-, Cyano-, Alkoxy-, Isocyanato-, Aldehyd-, Alkylcarbonyl-, Säureanhydrid- und Phosphorsäuregruppe. Diese funktionellen Gruppen sind über Alkylen-, Alkenylen- oder Arylen-Brückengruppen, die durch Sauerstoff- oder -NH-Gruppen unterbrochen sein können, an das Siliciumatom gebunden. Beispiele für nicht hydrolysierbare Reste R mit Vinyl- oder Alkinylgruppe sind C₂₋₆-Alkenyl, wie z.B. Vinyl, 1-Propenyl, 2-Propenyl und Butenyl und C₂₋₆-Alkinyl, wie z.B. Acetylenyl und Propargyl. Die genannten Brückengruppen und gegebenenfalls vorliegende Substituenten, wie bei den Alkylaminogruppen, leiten sich z.B. von den oben genannten Alkyl-, Alkenyl- oder Arylresten ab. Natürlich kann der Rest R auch mehr als eine funktionelle Gruppe aufweisen.

Konkrete Beispiele für nicht hydrolysierbare Reste R mit funktionellen Gruppen, über die eine Vernetzung möglich ist, sind ein Glycidyl- oder ein Glycidyloxy-(C₁₋₂₀)-alkylen-Rest, wie β-Glycidyloxyethyl, γ-Glycidyloxypropyl, δ-Glycidyloxybutyl, ε-Glycidyloxypentyl, ω-Glycidyloxyhexyl, und 2-(3,4-Epoxycyclohexyl)ethyl, ein (Meth)-acryloxy-(C₁₋₆)-alkylen-Rest, wobei (C₁₋₆)-Alkylen z.B. für Methylen, Ethylen, Propylen oder Butylen steht, und ein 3-lsocyanatopropylrest.

Konkrete Beispiele für entsprechende Silane sind γ-Glycidyloxypropyltrimethoxysilan (GPTS), γ-Glycidyloxypropyltriethoxysilan (GPTES), 3-Isocyanatopropyltri-ethoxysilan, 3-Isocyanatopropyldimethylchlorsilan, 3-Aminopropyltrimethoxysilan (APTS), 3-Aminopropyltriethoxysilan, N-(2-Aminoethyl)-3-aminoproyltrimethoxysilan, N-[N'-(2'-Aminoethyl)-2-aminoethyl]-3-aminopropyltrimethoxysilan, Hydroxymethyltriethoxysilan, Bis-(hydroxyethyl)-3-aminopropyltriethoxysilan, N-Hydroxy-ethyl-N-methylaminopropyltriethoxysilan, 3-(Meth)acryloxypropyl-triethoxysilan und 3-(Meth)-acryloxypropyltrimethoxysilan. Weitere Beispiele für erfindungsgemäß einsetzbare hydrolysierbare Silane können z.B. auch der EP-A-195493 entnommen werden.

Bevorzugte Beispiele für derartige funktionelle Gruppen sind vorstehend aufgeführte Glycidoxy- und (Meth)acryloxy-Reste. In einer bevorzugten Ausführungsform werden organisch modifizierte anorganische Polykondensate oder Vorstufen davon auf Basis von hydrolysierbaren Ausgangsverbindungen eingesetzt, wobei zumindest ein Teil der eingesetzten hydrolysierbaren Verbindungen mindestens einen nicht hydrolysierbaren Rest mit einer vernetzbaren funktionellen Gruppe aufweist. Z.B. enthalten mindestens 50 Mol-% und bevorzugt mindestens 80 Mol-% der eingesetzten hydrolysierbaren Ausgangsverbindungen mindestens eine solche vernetzbare Gruppe. Besonders bevorzugt sind γ-Glycidyloxypropyltrimethoxysilan (GPTS), y-Glycidyloxypropyltriethoxysilan (GPTES), 3-(Meth)acryloxypropyltriethoxysilan und 3-(Meth)-acryloxypropyltrimethoxysilan.

Außerdem können organisch modifizierte anorganische Polykondensate oder Vorstufen davon verwendet werden, die zumindest zum Teil organische Reste aufweisen, die mit Fluor substituiert sind. Hierfür können hydrolysierbare Silane mit mindestens einem nicht hydrolysierbaren Rest eingesetzt werden, der 1 bis 30 Fluoratome an Kohlenstoffatome gebunden aufweist, die vorzugsweise durch mindestens zwei Atome von Si getrennt sind. Als hydrolysierbare Gruppen können dabei z. B., solche eingesetzt werden, wie sie in Formel (I) für X angegeben sind. Konkrete Beispiele für Fluorsilane sind C₂F₅-CH₂CH₂-SiZ₃, n-C₆F₁₃-CH₂CH₂-SiZ₃, n-C₈F₁₇-CH₂CH₂-SiZ₃, n-C₁₀F₂₁-CH₂CH₂-SiZ₃ mit (Z = OCH₃, OC₂H₅ oder Cl); i-C₃F₇O-CH₂CH₂CH₂-SiCl₂(CH₃), n-C₆F₁₃-CH₂CH₂-SiCl₂(CH₃) und n-C₆F₁₃-CH₂CH₂-SiCl(CH₃)₂. Die Verwendung eines derartigen fluorierten Silans führt dazu, dass dem entsprechenden Überzug zusätzlich hydrophobe und oleophobe Eigenschaften verliehen werden. Derartige Silane werden in der DE 4118184 detailliert beschrieben.

Wie bereits oben aufgeführt können zur Herstellung der organisch modifizierten anorganischen Kondensate auch zum Teil hydrolysierbare Ausgangsverbindungen eingesetzt werden, die keine nicht hydrolysierbaren Gruppen aufweisen. Für die einsetzbaren hydrolysierbaren Gruppen und die einsetzbaren Elemente M wird auf die obenstehenden Ausführungen verwiesen. Besonders bevorzugt werden hierfür Alkoxide von Si, Zr und Ti verwendet. Diese Verbindungen weisen z.B. die Formel MX_{b} auf, worin M wie vorstehend definiert ist, X wie in Formel (I) definiert ist, vorzugsweise Halogen oder Alkoxy, und b der Wertigkeit des Elements entspricht. Bevorzugt sind Verbindungen der Formel MX₄, mit M = Si, Ti oder Zr, insbesondere Si(OMe)₄ oder Si(OEt)₄ Werden ausschließlich diese Verbindungen ohne nicht hydrolysierbare Gruppen eingesetzt, gelangt man zu rein anorganischen Kondensaten. Kondensate mit hydrolysierbaren Ausgangsverbindungen, die keine nicht hydrolysierbaren Gruppen enthalten, sind z.B. auch in WO 95/31413 (DE 4417405) beschrieben.

Der Matrixbildner kann aus den hydrolysierbaren Verbindungen insbesondere nach dem Sol-Gel-Verfahren erhalten werden. Beim Sol-Gel-Verfahren, das auch zur Herstellung der Nanopartikel verwendet werden kann, werden hydrolysierbare Verbindungen mit Wasser; gegebenenfalls unter saurer oder basischer Katalyse, hydrolysiert und gegebenenfalls zumindest teilweise kondensiert. Die Hydrolyse- und/oder Kondensationsreaktionen führen zur Bildung von Verbindungen oder Kondensaten mit Hydroxy-, Oxogruppen und/oder Oxobrücken, die als Vorstufen dienen. Es können stöchiometrische Wassermengen, aber auch geringere oder größere Mengen verwendet werden. Das sich bildende Sol kann durch geeignete Parameter, z.B. Kondensationsgrad, Lösungsmittel oder pH-Wert, auf die für die Zusammensetzung gewünschte Viskosität eingestellt werden. Weitere Einzelheiten des Sol-Gel-Verfahrens sind z.B. bei C.J. Brinker, G.W. Scherer: "Sol-Gel Science -The Physics and Chemistry of Sol-Gel-Processing", Academic Press, Boston, San Diego, New York, Sydney (1990) beschrieben.

Der Matrixbildner kann gewöhnlich ein Lösungsmittel umfassen. Als einsetzbare Lösungsmittel kommen sowohl Wasser als auch organische Lösungsmittel oder Mischungen in Betracht. Dabei handelt es sich um die üblichen, auf dem Gebiet der Beschichtung eingesetzten Lösungsmittel. Beispiele für geeignete organische Lösungsmittel sind Alkohole, vorzugsweise niedere aliphatische Alkohole (C₁-C₈-Alkohole), wie Methanol, Ethanol, 1-Propanol, i-Propanol und 1-Butanol, Ketone, vorzugsweise niedere Dialkylketone, wie Aceton und Methylisobutylketon, Ether, vorzugsweise niedere Dialkylether, wie Diethylether, oder Diolmonoether, Amide, wie Dimethylformamid, Tetrahydrofuran, Dioxan, Sulfoxide, Sulfone oder Butylglycol und deren Gemische. Bevorzugt werden Alkohole verwendet. Es können auch hochsiedende Lösungsmittel verwendet werden. Beim Sol-Gel-Verfahren kann das Lösungsmittel gegebenenfalls ein bei der Hydrolyse gebildeter Alkohol sein.

Die nanoskaligen Feststoffteilchen, die in der Zusammensetzung enthalten sind, können aus beliebigen anorganischen oder organischen Materialien bestehen. Organische Feststoffteilchen können z.B. aus einem Kunststoff bestehen; z.B. aus den vorstehend genannten organischen Polymeren, die gegebenenfalls zusätzliche funktionelle Gruppen, wie z.B. Carboxygruppen, enthalten. Vorzugsweise handelt es sich aber um nanoskalige anorganische Feststoffteilchen.

Vorzugsweise bestehen nanoskalige anorganische Feststoffteilchen aus Metallen oder Metallverbindungen, z.B. (gegebenenfalls hydratisierten) Oxiden wie ZnO, CdO, SiO₂, TiO₂, ZrO₂, CeO₂, SnO₂, Al₂O₃, In₂O₃, La₂O₃, Fe₂O₃, Cu₂O, Ta₂O₅, Nb₂O₅, V₂O₅, MoO₃ oder WO₃; Chalkogeniden wie beispielsweise Suifiden (zB, CdS, ZnS, PbS und Ag₂S), Seieniden (z.B. GaSe, CdSe und ZnSe) und Telluriden (z.B. ZnTe oder CdTe), Halogeniden wie AgCl, AgBr, Agl, CuCl, CuBr, Cdl₂ und Pbl₂; Carbiden wie CdC₂ oder SiC; Arseniden wie AlAs, GaAs und GeAs; Antimoniden wie InSb; Nitriden wie BN, AIN, Si₃N₄ und Ti₃N₄; Phosphiden wie GaP, InP, Zn₃P₂ und Cd₃P₂; Phosphaten, Silikaten, Zirkonaten, Aluminaten, Stannaten und den entsprechenden Mischoxiden (z. B. Metall-Zinn-Oxiden, wie Indium-Zinn-Oxid (ITO), Antimon-Zinn-Oxid (ATO), fluor-dotiertem Zinnoxid (FTO), Zn-dotieriem Al₂O₃, Leuchtpigmenten mit Y- oder Eu-haltigen Verbindungen, oder Mischoxiden mit Perowskitstruktur wie BaTiO₃ und PbTiO₃). Es können auch Mischungen verschiedener nanoskaliger Feststoffteilchen eingesetzt werden.

Bei den nanoskaligen anorganischen Feststoffteilchen handelt es sich bevorzugt um ein Oxid, Oxidhydrat, Nitrid oder Carbid von Si, Al, B, Zn, Cd, Ti, Zr, Ce, Sn, in, La, Fe, Cu, Ta, Nb, V, Mo oder W, besonders bevorzugt von Si, Al, B, Ta, Ti und Zr. Besonders bevorzugt werden Oxide bzw. Oxidhydrate eingesetzt. Bevorzugte nanoskalige anorganische Feststoffteilchen sind SiO₂, Al₂O₃, ITO, ATO, Ta₂O₅, AIOOH, ZrO₂ und TiO₂, wie Böhmit und kolloidales SiO₂. Die Nanopartikel sind z.B. im Handel erhältlich, nanoskalige SiO₂-Teilche sind z.B. handelsübliche Kieselsäureprodukte, z.B. Kieselsole, wie die Levasile®, Kieselsole der Bayer AG, oder pyrogene Kieselsäuren, z.B. die Aerosil-Produkte von Degussa. Nanopartikel können z.B. nach dem Sol-Gel-Verfahren oder anderen, dem Fachmann bekannten Verfahren hergestellt werden.

Nanoskalige Feststoffteilchen besitzen einen mittleren Teilchendurchmesser (röntgenographisch ermitteltes Volumenmittel) unter 1 µm, in der Regel unter 500 nm. Die erfindungsgemäßen nanoskaligen Feststoffteilchen besitzen einen mittleren Teilchendurchmesser (röntgenographisch ermitteltes Volumenmittel) von nicht mehr als 50 nm und mehr als 1 nm und vorzugsweise mehr als 2 nm, z. B. 1 bis 20 nm. Dieses Material kann in Form
eines Pulvers eingesetzt werden, es wird jedoch vorzugsweise in Form eines Sols oder einer Suspension verwendet.

Als Lösungsmittel für das Sol oder die Suspension ist jedes Lösungsmittel geeignet, das für derartige Sole oder Suspensionen entsprechend dem konkreten Nanopartikel gewählt wird. Bevorzugt handelt es sich um protische Lösungsmittel, insbesondere Wasser oder Alkohol. Beispiele für geeignete Lösungsmittel sind die vorstehend aufgeführten. Das Lösungsmittel eignet sich vorzugsweise auch zum Lösen, Suspendieren oder Mischen des später hinzuzugebenden Matrixbildners.

Die nanoskaligen Feststoffteilchen können z.B. in einer Menge von mindestens 5 Gew.-%, bevorzugt mindestens 10 Gew.-% und bevorzugter mindestens 15 Gew.-%, bezogen auf das Gesamtgewicht der Zusammensetzung, vorliegen. Die Zusammensetzung kann je nach Dichte der Nanopartikel bis zu 50 Gew.-% oder bis zu 75 Gew.-% oder darüber hinaus an Nanopartikeln enthalten.

Die Herstellung der nanoskaligen Teilchen kann auf übliche Weise erfolgen, z.B. durch Flammpyrolyse, Plasmaverfahren, Kolloidtechniken, Sol-Gel-Prozesse, kontrollierte Keim- und Wachstumsprozesse, MOCVD-Verfahren und Emulsionsverfahren. Diese Verfahren sind in der Literatur ausführlich beschrieben.

In einer Ausführungsform von besonderer Bedeutung können die Nanopartikel oberflächenmodifiziert sein. Bei der Oberflächenmodifizierung von nanoskaligen Feststoffteilchen handelt es sich um ein im Stand der Technik bekanntes Verfahren, wie es z.B. in WO 93/21127 (DE 4212633) beschrieben ist. Solche mit Oberflächengruppen modifizierte Nanopartikel und ihre Herstellung sind in der Technik bekannt und z.B. in WO 98/51747 (DE 19746885) und WO 01/51220 beschrieben.

Die Nanopartikel können mit vernetzbaren organischen Oberflächengruppen oberflächenmodifiziert sein. Besonders bevorzugt handelt es sich aber um Oberflächengruppen, die eine Reaktion mit einer zugegebenen Säure oder Base eingehen können, so dass die Ladung der Nanopartikel dadurch verändert werden kann. Die Oberflächengruppen weisen mit anderen Worten selbst eine saure oder basische Gruppe auf (Säure-/Basefunktion nach Lewis oder Brönsted). Bevorzugt handelt es sich um protische Gruppen. Unter protischen Gruppen werden analog zu protischen Lösungsmitteln Gruppen verstanden, die Protonen enthalten oder freisetzen und/oder Wasserstoffbrückenbildungen ausbilden können. Es kann sich auch um prototrope Gruppen handeln.

Bei der Oberflächenmodifikation handelt es sich bevorzugt um eine elektrosterische Oberflächenmodifikation, mit der Nanopartikel mit einer "Hülle" von sauren oder basischen Gruppen oberflächenmodifiziert sind, die den Oberflächenladungseffekt als Funktion der pK-Werts der Oberflächengruppe verstärken oder abschwächen können.

Durch die Oberflächenmodifizierung wird es möglich, die Wechselwirkung zwischen den Nanopartikeln als Funktion des pH-Wertes durch geeignete Wahl der Oberflächengruppen exakt einzustellen und die Rheologie maßzuschneidern. Ohne eine Oberflächenmodifizierung ist man auf die chemische Oberflächenbeschaffenheit der Partikel angewiesen und diese ist eine Stoffkonstante, die von Material zu Material anders ist, wie die literaturbekannten Zetapotentiale verschiedener Partikelsuspensionen zeigen. So kann man z.B. durch Oberflächenmodifizierung Carboxylgruppen oder Aminogruppen auf Nanopartikel aufbringen und ganz andere Eigenschaften bezüglich der eingestellten pH-Werte erzeugen.

Die Herstellung von oberflächenmodifizierten nanoskaligen Teilchen ist dem Fachmann bekannt und kann prinzipiell auf zwei verschiedenen Wegen durchgeführt werden, nämlich zum einen durch Oberflächenmodifizierung von bereits hergestellten nanoskaligen Feststoffteilchen und zum anderen durch Herstellung dieser anorganischen Feststoffteilchen unter Verwendung von einer oder mehreren Verbindungen, die für die Oberflächenmodifizierung geeignet sind. Für die Oberflächenmodifizierung direkt bei Herstellung der Teilchen eignen sich auch alle nachstehend genannten Verbindungen für eine anschließende Oberflächenmodifizierung.

Wird eine Oberflächenmodifizierung bereits hergestellter nanoskaliger Teilchen durchgeführt, eignen sich zu diesem Zweck bifunktionelle Oberflächenmodifikatoren (z.B mit einem Molekulargewicht unter 500), die über mindestens eine Gruppe verfügen, die mit auf der Oberfläche der nanoskaligen Feststoffteilchen vorhandenen (funktionellen) Gruppen (wie beispielsweise OH-Gruppen im Falle von Oxiden) reagieren oder zumindest wechselwirken können, und mindestens eine weitere funktionelle Gruppe, die bevorzugt mit der eingesetzten Säure oder Base reagieren kann (unter Ausbildung von Oberflächenladungen).

Bevorzugt werden für die Ausbildung der Bindung mit den Nanopartikeln kovalente und/oder koordinative Bindungen ausgebildet. Beispiele für funktionelle Gruppen der Oberflächenmodifikatoren, die die Anbindung an die Nanopartikel bewerkstelligen sind -SiX_{c}, worin X wie in Formel (I) definiert ist und bevorzugt Alkoxy darstellt und c 1, 2 oder 3 und bevorzugt 3 ist, ß-Diketongruppen, Carbonsäuregruppen, Aminogruppen, Aminosäurereste, Lactamgruppen und Proteinstrukturen. Gegebenenfalls kann auch eine primäre Oberflächenmodifizierung zur Schaffung einer passenden Kopplungsgruppe für den eigentlichen bifunktionellen Oberflächenmodifikator erfolgen.

Bei der zweiten Gruppe, über die vorzugsweise eine Reaktion mit der zur Erhöhung der Oberflächenladung eingesetzten Säure oder Base erfolgen kann, kann es sich z.B. um eine sauer/basisch wirkende, prototrope oder protische Gruppe handeln, z.B. Säurereste, wie z.B. -COOH, -SO₃H, -POOH oder CH-acide Gruppen, Lewissaure oder Lewis-basische Gruppen, Amine, Ammoniumreste, SiO-Gruppen, AIOOH-Gruppen und andere amphotere Oxide.

Konkrete Beispiele für zur Oberflächenmodifizierung der nanoskaligen Feststoffteilchen heranziehbare organische Verbindungen sind beispielsweise gesättigte oder ungesättigte Dicarbonsäuren, Aminocarbonsäuren, Diamine, oben genannte Silane der Formel (I) mit einer geeigneten funktionelle Gruppe im Rest R, z.B. eine Carboxy- oder Aminogruppe. ß-Dicarbonyl-Verbindungen mit geeigneter funktioneller Gruppe wie ß-Carbonylcarbonsäuren, und dergleichen.

Erfindungsgemäß wird die Oberflächenladung der Nanopartikel durch Zugabe und Umsetzung mit einer Säure oder Base in Abhängigkeit vom Nullpunkt im Absolutbetrag erhöht. Dem Fachmann ist bekannt, dass sich auf der Oberfläche von Partikeln gewöhnlich Gruppen befinden, die im allgemeinen relativ reaktionsfähig sind. Beispielsweise befinden sich auf solchen Partikeln als Oberflächengruppen Restvalenzen, wie Hydroxygruppen und Oxygruppen, z.B. bei Metalloxidpartikeln, oder Thiolgruppen und Thiogruppen, z.B. bei Metallsulfiden, oder Amino-, Amid- und Imidgruppen, z.B. bei Nitriden. Diese Palette an Oberflächengruppen, die mit einer Säure/Base umgesetzt werden können, kann durch die vorstehend beschriebene Oberflächenmodifikation gezielt und an die jeweiligen Anforderungen angepasst erweitert werden.

Die Nanopartikel weisen in der Regel durch die Anwesenheit anionischer und/oder kationischer Gruppen eine bestimmte Oberflächenladung auf. Erfindungsgemäß werden Nanopartikel verwendet, deren Oberflächenladung sich durch Änderung des pH-Werts bzw. durch Zugabe einer Base oder Säure einstellen lässt. Hierbei kann es sich zum Beispiel um eine Umsetzung einer Base mit Hydroxylgruppen auf dem Nanopartikel handeln, wobei eine negativ geladene O--Oberflächengruppe gebildet wird. Umgekehrt kann z.B. durch eine Säure eine kationische Oberflächengruppe erzeugt werden, z.B. eine Ammoniumgruppe. Alternativ oder zusätzlich kann die Reaktion mit Oberflächengruppen der vorstehend beschriebenen oberflächenmodifizierten Nanopartikel erfolgen. Erfindungsgemäß wird die Oberflächenladung der Nanopartikel durch Umsetzung mit einer Säure oder Base erhöht.

Die Erhöhung bezieht sich hierbei naturgemäß auf den Absolutbetrag der auf den Teilchen befindlichen Gesamtladung. Dabei kann es durch die Umsetzung mit der Säure oder Base auch zu einer Umkehr des Vorzeichens der Oberflächenladung kommen, wobei es erfindungsgemäß auf den Absolutwert ankommt. Bei einer positiven Oberflächengesamtladung der Ausgangsteilchen kann also durchaus durch Umsetzung mit der Säure/Base eine negative Oberflächengesamtladung zu einer Erhöhung der Oberflächenladung führen, wenn der Absolutbetrag größer ist als bei den Ausgangsteilchen (z.B. |-101| > |+5|).

Ein Maß für die Oberflächenladung ist das Zetapotential, welches dem Fachmann geläufig .ist. Bei vorgegebenen Materialien ist das Zetapotential eine Funktion der Chemie der Partikeloberfläche und kann über den pH-Wert in der Größe verschoben werden, da durch die pH-Änderung eine Änderung der Oberflächenladung erfolgen kann. Bevorzugt erfolgt die Zugabe der Säure oder Base so, dass das Zetapotential der nanoskaligen Teilchen kleiner gleich -0,3 mV oder größer gleich +0,3 mV und noch bevorzugter kleiner gleich -1,0 mV oder größer gleich +1,0 mV ist. Entsprechend der Erhöhung der Oberflächenladung wird durch die Zugabe der Base oder Säure der Absolutbetrag des Zetapotentials erhöht.

Messverfahren zur Bestimmung des Zetapotentials sind dem Fachmann bekannt. In der Erfindung wurde das Zetapotential durch Messung der Geschwindigkeit der Nanopartikel in einem elektrischen Feld (Gleichstrom) bestimmt (Elektrophorese). Die Messung kann z.B. durch Akustophorese erfolgen. Die Messung des Zetapotentials erfolgt an den hergestellten Zusammensetzungen.

Bei der Säure oder Base kann es sich um jede dem Fachmann bekannte Verbindung handeln, die zur Erhöhung der Oberflächenladung geeignet ist. Es kann sich um Lewis-Säuren bzw. Lewis-Basen und insbesondere um Brönsted-Säuren oder Brönsted-Basen handeln. Beispiele für Säuren sind Salzsäure, Phosphorsäure, Essigsäure, Ameisensäure oder Ammoniumsalze. Beispiele für Basen sind Ammoniak, Amine und quaternäre Ammoniumhydroxide, Alkalicarbonate, Alkalilaugen, wie NaOH und KOH, und Erdalkalilaugen wie Ca(OH)₂. Eine bevorzugte Base ist ein quaternäres Ammoniumhydroxid, z.B. NR'₄OH, worin R' gleich oder verschieden ein Alkyl, z.B. mit 1 bis 6 C-Atomen, Cycloalkyl, z.B. mit 5 bis 12 C-Atomen, oder ein Aryl, z.B. mit 6 bis 12 C-Atomen, sein kann oder das N-Atom Bestandteil eines heterocyclischen Rings sein kann, z.B. Imidazolinium- oder Pyridinium-Verbindungen. Beispiele-für Amine haben die Formel NR"₃, worin R" H oder R' wie vorstehend definiert ist.

Bevorzugt werden Basen eingesetzt, so dass sich eine negative Oberflächenladung ergibt (negatives Zetapotential). Die eingesetzte Base oder Säure wird z.B. bezüglich der Stärke und der Menge so gewählt, dass die Oberflächenladung in geeigneter Weise erhöht wird. Die zweckmäßige Säure/Base und die geeignete Menge hängen von den eingesetzten Materialien, den Mengen dieser Materialien und den konkreten Anforderungen, insbesondere an das nichtnewtonsche Verhalten, ab und können vom Fachmann auf Basis der vorliegenden Erfindung ohne weiteres ermittelt werden.

Die Zugabe der Säure oder Base zu den Nanopartikeln zur Erhöhung der Oberflächenladung durch Reaktion mit den Oberflächengruppen kann zu einem beliebigen Zeitpunkt während der Herstellung der nichtnewtonschen Zusammensetzung erfolgen. Bevorzugt erfolgt die Zugabe zu einem Sol der Nanopartikel, also vor dem Mischen mit dem Matrixbildner. Gegebenenfalls kann zur Erleichterung der Umsetzung mit der Säure/Base erwärmt werden, das ist in der Regel aber nicht nötig.

Die Ausbildung des nichtnewtonschen Verhaltens in der Zusammensetzung ist dabei das Ergebnis eines komplexen Zusammenspiels der eingesetzten Komponenten, und/oder des Lösungsmittelgehalts. Dies ist dem Fachmann bekannt. Zur Erzielung des nichtnewtonschen Verhaltens kann es erforderlich sein, z.B. Lösungsmittel zu entfernen. Durch die vorliegende Erfindung wird dem Fachmann ein weiterer Parameter an die Hand gegeben, nämlich die Erhöhung der Oberflächenladung der Nanopartikel, um die Rheologie der Zusammensetzung in Kombination mit anderen bekannten Maßnahmen auf den gewünschten Zustand zu bringen.

In der Zusammensetzung können weitere Additive enthalten sein, die in der Technik üblicherweise je nach Zweck und gewünschten Eigenschaften zugegeben werden. Konkrete Beispiele sind Thixotropiermittel, Vernetzungsmittel, Lösungsmittel, z.B. die oben genannten, organische und anorganische Farbpigmente, Metallkolloide, z.B. als Träger optischer Funktionen, Farbstoffe, UV-Absorber, Gleitmittel, Verlaufsmittel, Netzmittel, Haftvermittler, inerte Nanopartikel und Starter.

Inerte Nanopartikel sind nanoskalige Feststoffteilchen, die unter den in den erfindungsgemäßen Zusammensetzungen vorliegenden Bedingungen nicht mit Säuren oder Basen reagieren und somit nicht ihre Oberflächenladung verändern. Die Rheologie der Zusammensetzung wird durch die inerten Nanopartikel zumindest in Abhängigkeit von der Säure- oder Basezugabe nicht verändert. Als Materialien für die Nanopartikel kommen grundsätzlich alle vorstehend genannten Materialien für Nanopartikel mit der genannten Einschränkung in Betracht.

Der Starter kann zur thermisch oder photochemisch induzierten Vernetzung dienen. Als Starter kommen alle geläufigen und dem Fachmann bekannten Starter/Startsysteme in Frage, einschließlich radikalischer Photostarter, radikalischer Thermostarter, kationischer Photostarter, kationischer Thermostarter und beliebiger Kombinationen derselben.

Als Vernetzungsmittel können die in dem Stand der Technik üblichen organischen Verbindungen mit mindestens zwei funktionellen Gruppen eingesetzt werden. Selbstverständlich sind die funktionellen Gruppen zweckmäßigerweise so zu wählen, dass darüber eine Vernetzung der Zusammensetzung stattfinden kann.

Die organisch modifizierten anorganischen Bindemittel können gegebenenfalls als Zumischung auch organische Polymere enthalten, die gegebenenfalls über funktionelle Gruppen zur Vernetzung verfügen. Als Beispiele sei auf die vorstehend aufgeführten Beispiele für organische Polymere verwiesen.

Wie vorher erläutert sind dem Fachmann die Maßnahmen zur Erzielung nichtnewtonschen Verhaltens geläufig. Konkrete Bereiche für derartige Maßnahmen können z.B. in WO 01/51220 gefunden werden. Die Zusammensetzung kann auch erst nichtnewtonsch werden, nachdem sie bereits z.B. zur Beschichtung verwendet wurde. Z.B. kann die Zusammensetzung auf ein Substrat aufgetragen werden und erst nach dem Auftrag z.B. durch Entfernen von Lösungsmittel in eine nichtnewtonsche Zusammensetzung überführt werden. In dem nichtnewtonschen Zustand wird die Zusammensetzung dann weiter verarbeitet werden, z.B. durch Prägen oder Drucken.

Derartige nichtnewtonsche Zusammensetzungen besitzen vielfältige Verwendungsmöglichkeiten. Die Zusammensetzungen eignen sich z.B. zum Beschichten, z.B. für Slotcoating, Rakeln oder Anstreichen, oder zum Foliengießen oder als Druckpaste, wobei sich das nichtnewtonsche Verhalten wie vorstehend erläutert auch erst nach Auftrag auf ein Substrat ausbilden kann. Die Kontrolle der Rheologie durch das erfindungsgemäße Verfahren eignet sich insbesondere auch für Beschichtungen mit Oberflächenreliefs, insbesondere mikrostrukturierbaren Oberflächenreliefs. Diese können z.B. nach dem in WO 01/51220 beschriebenen Verfahren erhalten werden.

Sofern die Zusammensetzung als Beschichtungszusammensetzung oder als Druckfarbe auf ein Substrat aufgebracht wird, kann jedes beliebige Substrat verwendet werden. Beispiele dafür sind Metall, Glas, Keramik, Papier, Kunststoff, Textilstoffe oder natürliche Werkstoffe wie z.B. Holz. Als Beispiele für Metallsubstrate seien z.B. Kupfer, Aluminium, Messing, Eisen und Zink genannt. Beispiele für Kunststoffsubstrate sind Polycarbonat, Polymethylmethacrylat, Polyacrylate, Polyethylenterephthalat. Das Substrat kann in jedweder Form vorliegen, z.B. als Platte oder Folie. Natürlich eignen sich auch oberflächenbehandelte Substrate zur Herstellung mikrostrukturierter Oberflächen, z.B. lackierte oder metallisierte Oberflächen.

Der Auftrag der Zusammensetzung kann auf herkömmliche Weise erfolgen. Hierbei können nasschemischen Beschichtungsverfahren eingesetzt werden. Beispiele sind Schleuderbeschichten, (Etektro)tauchbeschichten, Rakeln, Sprühen, Spritzen, Gießen, Streichen, Flutbeschichten, Foliengießen, Messergießen, Slotcoating, Meniskus-Coating, Curtain-Coating, Walzenauftrag oder übliche Druckverfahren, wie Siebdruck oder Flexoprint. Bevorzugt sind kontinuierliche Beschichtungsverfahren wie Flachspritzen, Flexoprintverfahren, Walzenauftrag oder nasschemische Folienbeschichtungstechniken.

Zur Herstellung von Oberflächenreliefs eignen sich Druck- und Prägeverfahren. Als Druckverfahren kommen alle üblichen Verfahren der Hoch- und Tiefdrucktechnik und insbesondere Siebdruckverfahren in Frage.

Sofern ein Oberflächenrelief hergestellt werden soll, das bevorzugt mikrostrukturiert ist, erfolgt die Prägung in der aufgetragenen Zusammensetzung über eine übliche Prägevorrichtung. Dabei kann es sich z.B. um einen Stempel oder eine Walze handeln. Einzelheiten zu den bekannten Prägeverfahren finden sich z.B. in WO 01/51220.

In der Technik ist das Heißprägen und das Reaktivprägen bekannt. Im Gegensatz zum Reaktivprägen, bei dem die Härtung erfolgt, solange sich die Prägevorrichtung in der Beschichtungszusammensetzung befindet, braucht mit der erfindungsgemäßen Zusammensetzung wegen des erfindungsgemäß eingestellten nichtnewtonschen Verhaltens erst dann gehärtet werden, wenn die Prägevorrichtung aus der Beschichtungszusammensetzung entfernt wurde. Diese anschließende Härtung erfolgt z.B. durch Vernetzung durch Bestrahlung, bevorzugt durch Bestrahlung mit UV-Strahlung. Auf diese Weise lassen sich außerordentlich hohe Verarbeitungsgeschwindigkeiten erreichen.

Unabhängig von der jeweiligen Verwendung der Zusammensetzung wird sie zum Schluss zur Fertigstellung gehärtet oder verdichtet. Die Härtung umfasst vorzugsweise eine Vernetzung über im Matrixbildner enthaltene funktionelle Gruppen. Die Härtung wird insbesondere in Form einer thermischen Härtung, einer Härtung durch Strahlung oder einer Kombination derselben durchgeführt. Bevorzugt ist eine UV-Härtung.

Die Zusammensetzungen können so gewählt werden, dass undurchsichtige oder transparente, elektrisch leitende, photoleitfähige oder isolierende Beschichtungen oder Materialien erhalten werden. Bevorzugt werden, insbesondere für optische Anwendungen, einschließlich holographischer Anwendungen, transparente Beschichtungen hergestellt.

Die erfindungsgemäßen Zusammensetzungen können vorteilhaft für beschichtete Substrate mit mikrostrukturiertem Oberflächenrelief zur Herstellung von optischen oder elektronischen Mikrostrukturen eingesetzt werden. Beispiele sind optische Komponenten, wie Mikrolinsen und Mikrolinsen-Arrays, Fresnel-Linsen, Mikrofresnel-Linsen und -Arrays, Lichtlenksysteme, optische Wellenleiter und Wellenleiterkomponenten, optische Gitter, Beugungsgitter, Hologramme, Datenspeicher, digitale, optisch lesbare Speicher, Antireflexstrukturen (Mottenaugen), Lichtfallen für photovoltaische Anwendungen, Labelling, geprägte Antiglare-Schichten, Mikroreaktoren, Mikrotiterplatten, Reliefstrukturen auf aero- und hydrodynamischen Oberflächen sowie Oberflächen mit spezieller Haptik, transparente, elektrisch leitfähige Reliefstrukturen, optische Reliefs auf PC- oder PMMA-Platten, Sicherheitskennzeichen, reflektierende Schichten für Verkehrsschilder, stochastische Mikrostrukturen mit fraktalen Substrukturen (Lotusblattstrukturen) und geprägte Resiststrukturen für die Strukturierung von Halbleitermaterialien.

Herstellbare holographische optische Mikromuster auf Glas eignen sich z.B. als Lichtleiter für die Gebäudeverglasung, für dekorative Zwecke, zur Produktidentifizierung oder als holographische Spiegel für Bildschirme in Fenstern oder für Headup-Displays in Kraft- und Luftfahrzeug-Anwendungen. Vorteile solcher Muster sind die Maschinenlesbarkeit und die brilliante optische Qualität. Die Muster können mit einer Deckschicht mit unterschiedlichem Brechungsindex zur Einebnung versehen werden, um Abriebbeständigkeit und Kopierschutz zu verbessern.

Die erfindungsgemäßen Zusammensetzungen ermöglichen zur Prägung geeignete Materialien mit relativ geringe Viskosität und niedrigem Brechungsindex für Glas, die auch mit flexiblen Stempeln verarbeitet werden können.

Das folgende Beispiel dient der weiteren Erläuterung der vorliegenden Erfindung.

### Beispiel

### A) Herstellung

### a) Herstellung einer Beschichtungszusammensetzung

Zur Herstellung eines nanoskaligen SiO₂-Sols werden 20,48 g (0,098 mol) Tetraethylorthosilicat (TEOS) zu 50,85 g Ethanol gegeben (Lösung A). 1,75 g einer 1 molaren Ammoniaklösung werden mit 34,41 g Wasser verdünnt (Lösung B). Hydrolyse und Vorkondensation erfolgt durch Zugabe von Lösung A zu Lösung B innerhalb von 1 h. Nach 24 h bei 70°C bilden sich Nanoteilchen mit einem mittleren Teilchenradius von 5 nm in einem Sol mit einem Feststoffgehalt von 5,5 Gew.-%.

Die Beschichtungsmatrix wurde durch Zugabe von 27 g (1,5 mol) Wasser zu 236,12 g (1 mol) 3-Glycidoxypropyltrimethoxysilan (GPTS) hergestellt. Nach Erwärmen für 24 h unter Rückfluss wurde das Lösungsmittel (Methanol) durch Vakuumdestillation entfernt.

Zur Änderung des Zetapotentials der nanoskaligen SiO₂-Teilchen wurden jeweils 24 mg, 48 mg, 192 mg und 216 mg Tetrahexylammoniumhydroxid (THAH, 40% in Wasser) zu 107,5 g des erhaltenen SiO₂-Sols unter heftigem Rühren über 30 min bei 25°C gegeben. 2,5 g des GPTS-Sols wurden zur Mischung gegeben und es wurde 30 min gerührt. Es wurden GPTS/SiO₂/THAH-Sole mit einem pH von 8,4 für 24 mg, einem pH von 9,2 für 48 mg, einem pH von 9,8 für 192 mg und einem pH von 10,4 für 216 mg THAH erhalten.

Die Viskosität in Abhängigkeit von der Schergeschwindigkeit wurde mit einem Rotationsviskosimeter gemessen (Pysica; Rheolab MC 120). Das Zetapotential wurde mit einem Zetasizer ESA-Sample SSP-1, MATEC, gemessen (Geschwindigkeit der Nanopartikel im elektrischen Feld (Gleichstrom), Akustophoresebestimmung).

### B) Bewertung des nichtnewtonschen Verhaltens

Die vorstehend hergestellten Zusammensetzungen mit SiO₂-Teilchen wurden bezüglich des nichtnewtonschen Verhaltens mit Hilfe einer Viskositätsmessung in Abhängigkeit von der Scherspannungsgeschwindigkeit untersucht. Figur 1 gibt die Ergebnisse für Zusammensetzungen nach dem Stand der Technik ohne Erhöhung der Oberflächenladung an, während Figur 2 die Ergebnisse an den erfindungsgemäßen Zusammensetzungen zeigt, die mit variablen Mengen einer Base (THAH) umgesetzt wurden.

Danach zeigen die in Figur 1 aufgeführten Zusammensetzungen nach dem Stand der Technik ab einem Gehalt von 20 Gew.-% SiO₂ Nanopartikeln ein an dem Anstieg im Anfangsbereich erkennbares strukturviskoses Verhalten. Die beobachtete Steigung der Kurve ist bei der Zusammensetzung mit 20 Gew.-% SiO₂-Nanopartikeln sehr viel steiler als bei 30 Gew.-% SiO₂. Dies bedeutet, dass die Zusammensetzung mit einem größeren Strukturviskositätseffekt (30 Gew,-%) eine längere Relaxationszeit der Viskosität aufweist.

In Figur 2 sind erfindungsgemäße Zusammensetzungen mit 30 Gew.-% SiO₂ Nanopartikeln und einer Zugabe von THAH in einer Menge von 24 mg, 48 mg bzw. 192 mg aufgeführt. Messungen des Zetapotentials ergaben für die Zusammensetzung mit 24 mg THAH ein Zetapotential von -5,0 mV, mit 48 mg ein Potential von -12,3 mV und mit 192 mg ein Potential von -14,7 mV. Bei diesen Zusammensetzungen ergaben sich für steigende und sinkende Schergeschwindigkeiten unterschiedliche Resultate, so dass jede Kurve 2 Äste ausbildet, d.h. es ergab sich ein thixotropes Verhalten. Im Bereich niedriger Scherrate hat das Sol eine Viskosität von 70 Pa.s bei einem Zetapotential von -5 mV, von 78 Pa.s bei einem Zetapotential von -12,3 mV, von 93 Pa.s bei einem Zetapotential von -14,7 mV. Bei D = 100 1/s ergibt sich eine Abweichung von 18 Pa.s, was im Rahmen der Messgenauigkeit liegt.

Der Vergleich mit dem Ergebnis aus Figur 1 zeigt, das die Höhe des Strukturviskositätseffekt vergleichbar oder leicht erhöht ist. Vor allem ergeben sich bei den erfindungsgemäßen Zusammensetzungen mit steigender THAH-Zugabe deutlich steilere Steigungen gegenüber dem Stand der Technik. Dies wird beim Ast für sinkende Schergeschwindigkeit besonders offensichtlich, der für den Prägevorgang von besonderer Bedeutung ist. Dies bedeutet, dass durch Zugabe der Base kürzere Relaxationszeiten erreicht werden können, wobei die kürzeste Relaxationbei der höchsten Zugabe THAH beobachtet wurde.

Für die Strukturierung sind ein hoher Strukturviskositätseffekt und eine kurze Relaxationszeit erforderlich, um ein gute Strukturierung zu ermöglichen, wenn der Stempel vor Härtung entfernt werden soll. Lange Relaxationszeiten führen zu einer schnelleren Glättung einer geprägten Struktur in der Zeit zwischen der Entfernung der Prägevorrichtung und der Härtung, wodurch sich die Genauigkeit der Struktur verschlechtert.

## Patentansprüche

1. Zusammensetzung mit nichtnewtonschem Verhalten umfassend einen Matrixbildner und nanoskalige Feststoffteilchen mit einem mittleren Teilchendurchmesser (röntgenographisch ermitteltes Volumenmittel) nicht mehr als 50 nm und mehr als 1 nm, **dadurch gekennzeichnet, dass** die Oberflächenladung der Teilchen durch Zugabe einer Säure oder Base erhöht worden ist.

2. Zusammensetzung nach Anspruch 1, **dadurch gekennzeichnet, dass** die Oberflächenladung der Teilchen durch Umsetzung mit der Säure oder Base so erhöht ist, dass das Zetapotential im Absolutbetrag erhöht wird.

3. Zusammensetzung nach Anspruch 1 oder Anspruch 2, **dadurch gekennzeichnet, dass** die nanoskaligen Feststoffteilchen mindestens 5 Gew. -% des Gesamtgewichts der Zusammensetzung ausmachen.

4. Zusammensetzung nach einem der Ansprüche 1 bis 3, **dadurch gekennzeichnet, dass** der Matrixbildner ein vernetzbarer Matrixbildner ist.

5. Zusammensetzung nach einem der Ansprüche 1 bis 4, **dadurch gekennzeichnet, dass** der Matrixbildner ein organisches Polymer oder ein organisch modifiziertes anorganisches Polykondensat oder eine Vorstufe davon ist.

6. Zusammensetzung nach Anspruch 5, **dadurch gekennzeichnet, dass** das organisch modifizierte anorganische Polykondensat oder dessen Vorstufe ein Polyorganosiloxan oder dessen Vorstufen umfasst.

7. Zusammensetzung nach einem der Ansprüche 5 bis 6, **dadurch gekennzeichnet, dass** das organische Polymer oder das organisch modifizierte anorganische Polykondensat oder dessen Vorstufe organische Reste mit funktionellen Gruppen enthalten, über die eine Vernetzung möglich ist.

8. Zusammensetzung nach einem der Ansprüche 1 bis 7, **dadurch gekennzeichnet, dass** die nanoskaligen Feststoffteilchen Metalloxidteilchen sind, insbesondere SiO₂, Al₂O₃, ITO, ATO, AIOOH, Ta₂O₅, ZrO₂ und/oder TiO₂.

9. Zusammensetzung nach einem der Ansprüche 1 bis 8, **dadurch gekennzeichnet, dass** die Zusammensetzung ferner inerte nanoskaliege Feststoffteilchen umfasst.

10. Zusammensetzung nach einem der Ansprüche 1 bis 9, **dadurch gekennzeichnet, dass** die nanoskaligen Feststoffteilchen oberflächenmodifiziert sind, vorzugsweise mit elektrosterischen und/oder protischen Gruppen.

11. Zusammensetzung nach einem der Ansprüche 1 bis 10, **dadurch gekennzeichnet, dass** die Zusammensetzung thixotrop oder strukturviskos ist.

12. Zusammensetzung nach einem der Ansprüche 1 bis 11, **dadurch gekennzeichnet, dass** es sich um eine Zusammensetzung zum Beschichten oder zum Foliengießen oder um eine Druckpaste handelt.

13. Verfahren zur Herstellung einer Zusammensetzung umfassend einen Matrixbildner und nanoskaligen Feststoffteilchen mit einem mittleren Teilchendurchmesser (röntgenographisch ermitteltes Volumenmittel) nicht mehr als 50 nm und mehr als 1 nm, bei dem die Feststoffteilchen oder ein Sol der Feststoffteilchen mit dem Matrixbildner und gegebenenfalls einem Lösungsmittel gemischt werden, um, gegebenenfalls nach teilweiser oder vollständiger Entfernung des Lösungsmittels, eine Zusammensetzung mit nichtnewtonschem Verhalten zu erhalten, **dadurch gekennzeichnet, dass** die Oberflächenladung der Teilchen durch Zugabe einer Base oder einer Säure erhöht wird.

14. Verfahren nach Anspruch 13, **dadurch gekennzeichnet, dass** die Oberflächenladung der Feststoffteilchen in dem Sol der Feststoffteilchen vor Zugabe des Matrixbildners durch Zugabe einer Säure oder einer Base erhöht wird.

15. Verfahren nach Anspruch 13 oder Anspruch 14, **dadurch gekennzeichnet, dass** das Sol ein protisches Lösungsmittel umfasst, in dem der Matrixbildner lösbar oder dispergierbar ist oder mit dem der Matrixbildner mischbar ist.

16. Verfahren nach einem der Ansprüche 13 bis 15, **dadurch gekennzeichnet, dass** zur Erhöhung der Oberflächenladung eine Säure verwendet wird.

17. Verfahren nach einem der Ansprüche 13 bis 15, **dadurch gekennzeichnet, dass** zur Erhöhung der Oberflächenladung eine Base verwendet wird, vorzugsweise ein Amin oder ein quaternäres Ammoniumhydroxid.

18. Verfahren nach einem der Ansprüche 13 bis 17, **dadurch gekennzeichnet, dass** die Zusammensetzung auf ein Substrat aufgetragen wird und dann nichtnewtonsch gemacht wird.

19. Verfahren zur Einstellung des rheologischen Verhaltens einer Zusammensetzung umfassend einen Matrixbildner und nanoskalige Feststoffteilchen mit einem mittleren Teilchendurchmesser (röntgenographisch ermitteltes Volumenmittel) nicht mehr als 50 nm und mehr als 1 nm, bei dem die Feststoffteilchen oder ein Sol der Feststoffteilchen mit dem Matrixbildner und gegebenenfalls einem Lösungsmittel gemischt werden, um, gegebenenfalls nach teilweiser oder vollständiger Entfernung des Lösungsmittels, eine Zusammensetzung mit nichtnewtonschem Verhalten zu erhalten, **dadurch gekennzeichnet, dass** die Oberflächenladung der Teilchen durch Zugabe einer Base oder einer Säure erhöht wird.

20. Beschichtetes Substrat, bei dem die Beschichtung eine gehärtete oder verdichtete Zusammensetzung nach einem der Ansprüche 1 bis 12 ist.

21. Beschichtetes Substrat nach Anspruch 20, **dadurch gekennzeichnet, dass** die Beschichtung ein mikrostrukturiertes Oberflächenrelief aufweist.

22. Verwendung eines Substrats nach Anspruch 20 oder Anspruch 21 für optische, einschließlich holographische, elektronische, mikromechanische und/oder schmutzabweisende Anwendungen.

## Claims

1. Composition with non-Newtonian behaviour, comprising a matrix former and nanoscale particulate solids having a mean particle diameter (volume mean determined by X-radiography) of not more than 50 nm and more than 1 nm , **characterized in that** the surface charge of the particles has been increased by adding an acid or base.

2. Composition according to Claim 1, **characterized in that** the surface charge of the particles was increased by reaction with the acid or base in such a way that the absolute value of the zeta potential is increased.

3. Composition according to Claim 1 or Claim 2, **characterized in that** the nanoscale particulate solids make up at least 5% by weight of the total weight of the composition.

4. Composition according to one of Claims 1 to 3, **characterized in that** the matrix former is a crosslinkable matrix former.

5. Composition according to one of Claims 1 to 4, **characterized in that** the matrix former is an organic polymer or an organically modified inorganic polycondensate or a precursor thereof.

6. Composition according to Claim 5, **characterized in that** the organically modified inorganic polycondensate or its precursor is a polyorganosiloxane or its precursors.

7. Composition according to one of Claims 5 to 6, **characterized in that** the organic polymer or the organically modified inorganic polycondensate or precursor thereof contains organic radicals having functional groups by way of which crosslinking is possible.

8. Composition according to one of Claims 1 to 7, **characterized in that** the nanoscale particulate solids are metal oxide particles, in particular SiO₂, Al₂O₃, ITO, ATO, AlOOH, Ta₂O₅, ZrO₂ and/or TiO₂.

9. Composition according to one of Claims 1 to 8, **characterized in that** the composition further comprises inert nanoscale particulate solids.

10. Composition according to one of Claims 1 to 9, **characterized in that** the nanoscale particulate solids are in surface-modified form, preferably with electrosteric and/or protic groups.

11. Composition according to one of Claims 1 to 10, **characterized in that** the composition is thixotropic or pseudoplastic.

12. Composition according to one of Claims 1 to 11, **characterized in that** it is a composition for coating or for film casting or is a printing paste.

13. Process for preparing a composition comprising a matrix former and nanoscale particulate solids having a mean particle diameter (volume mean determined by X-radiography) of not more than 50 nm and more than 1 nm, wherein the particulate solids or a sol of the particulate solids are or is mixed with the matrix former and, if desired, a solvent to give, following partial or complete removal of the solvent where appropriate, a composition with non-Newtonian behaviour, **characterized in that** the surface charge of the particles is increased by adding a base or an acid.

14. Process according to Claim 13, **characterized in that** the surface charge of the particulate solids is increased in the sol of the particulate solids before the matrix former is added, by adding an acid or a base.

15. Process according to Claim 13 or Claim 14, **characterized in that** the sol comprises a protic solvent in which the matrix former is soluble or dispersible or with which the matrix former is miscible.

16. Process according to one of Claims 13 to 15, **characterized in that** an acid is used to increase the surface charge.

17. Process according to one of Claims 13 to 15, **characterized in that** an base is used to increase the surface charge, preferably an amine or a quaternary ammonium hydroxide.

18. Process according to one of Claims 13 to 17, **characterized in that** the composition is applied to a substrate and then rendered non-Newtonian.

19. Process for adjusting the rheology behaviour of a composition comprising a matrix former and nanoscale particulate solids having a mean particle diameter (volume mean determined by X-radiography) of not more than 50 nm and more than 1 nm, wherein the particulate solids or a sol of the particulate solids are or is mixed with the matrix former and, if desired, a solvent to give, following partial or complete removal of the solvent where appropriate, a composition with non-Newtonian behaviour, **characterized in that** the surface charge of the particles is increased by adding a base or an acid.

20. Coated substrate, wherein the coating is a cured or compacted composition according to one of Claims 1 to 12.

21. Coated substrate according to Claim 20, **characterized in that** the coating has a microstructured surface relief.

22. Use of a substrate according to Claim 20 or Claim 21 for optical applications, including holographic, electronic, micromechanical and/or dirt repellency applications.

## Revendications

1. Composition à comportement non newtonien, comprenant un agent de formation de matrice et des particules solides nanométriques ayant un diamètre de particule moyen (moyenne en volume calculée par rayons X) inférieur ou égal à 50 nm et supérieur à 1 nm, **caractérisée en ce que** la charge de surface des particules a été augmentée par ajout d'un acide ou d'une base.

2. Composition selon la revendication 1, **caractérisée en ce que** la charge de surface des particules est augmentée par mise en réaction avec l'acide ou la base de manière à augmenter le potentiel zêta dans l'absolu.

3. Composition selon la revendication 1 ou la revendication 2, **caractérisée en ce que** les particules solides nanométriques représentent au moins 5 % en poids du poids total de la composition.

4. Composition selon l'une quelconque des revendications 1 à 3, **caractérisée en ce que** l'agent de formation de matrice est un agent de formation de matrice réticulable.

5. Composition selon l'une quelconque des revendications 1 à 4, **caractérisée en ce que** l'agent de formation de matrice est un polymère organique ou un polycondensat inorganique modifié organiquement ou un précurseur de celui-ci.

6. Composition selon la revendication 5, **caractérisée en ce que** le polycondensat inorganique modifié organiquement ou son précurseur comprend un polyorganosiloxane ou ses précurseurs.

7. Composition selon l'une quelconque des revendications 5 à 6, **caractérisée en ce que** le polymère organique ou le polycondensat inorganique modifié organiquement ou son précurseur contient des radicaux organiques à groupes fonctionnels, par le biais desquels une réticulation est possible.

8. Composition selon l'une quelconque des revendications 1 à 7, **caractérisée en ce que** les particules solides nanométriques sont des particules d'oxyde métallique, notamment SiO₂, Al₂O₃, ITO, ATO, AIOOH, Ta₂O₅, ZrO₂ et/ou TiO₂.

9. Composition selon l'une quelconque des revendications 1 à 8, **caractérisée en ce que** la composition comprend en outre des particules solides nanométriques inertes.

10. Composition selon l'une quelconque des revendications 1 à 9, **caractérisée en ce que** les particules solides nanométriques sont modifiées en surface, de préférence avec des groupes électrostériques et/ou protiques.

11. Composition selon l'une quelconque des revendications 1 à 10, **caractérisée en ce que** la composition est thixotropique ou pseudo-plastique.

12. Composition selon l'une quelconque des revendications 1 à 11, **caractérisée en ce qu'**il s'agit d'une composition pour le revêtement ou pour le coulage de feuilles ou d'une pâte d'impression.

13. Procédé de fabrication d'une composition comprenant un agent de formation de matrice et des particules solides nanométriques ayant un diamètre de particule moyen (moyenne en volume calculée par rayons X) inférieur ou égal à 50 nm et supérieur à 1 nm, selon lequel les particules solides ou un sol des particules solides sont mélangés avec l'agent de formation de matrice et éventuellement un solvant, afin d'obtenir une composition à comportement non newtonien, éventuellement après élimination partielle ou totale du solvant, **caractérisé en ce que** la charge de surface des particules est augmentée par ajout d'une base ou d'un acide.

14. Procédé selon la revendication 13, **caractérisé en ce que** la charge de surface des particules solides dans le sol des particules solides est augmentée avant l'ajout de l'agent de formation de matrice par ajout d'un acide ou d'une base.

15. Procédé selon la revendication 13 ou la revendication 14, **caractérisé en ce que** le sol comprend un solvant protique dans lequel l'agent de formation de matrice est soluble ou dispersible ou avec lequel l'agent de formation de matrice est miscible.

16. Procédé selon l'une quelconque des revendications 13 à 15, **caractérisé en ce qu'**un acide est utilisé pour l'augmentation de la charge de surface.

17. Procédé selon l'une quelconque des revendications 13 à 15, **caractérisé en ce qu'**une base est utilisée pour l'augmentation de la charge de surface, de préférence une amine ou de l'hydroxyde d'ammonium quaternaire.

18. Procédé selon l'une quelconque des revendications 13 à 17, **caractérisé en ce que** la composition est appliquée sur un substrat, puis rendue non newtonienne.

19. Procédé d'ajustement du comportement rhéologique d'une composition comprenant un agent de formation de matrice et des particules solides nanométriques ayant un diamètre de particule moyen (moyenne en volume calculée par rayons X) inférieur ou égal à 50 nm et supérieur à 1 nm, selon lequel les particules solides ou un sol des particules solides sont mélangés avec l'agent de formation de matrice et éventuellement un solvant, afin d'obtenir une composition à comportement non newtonien, éventuellement après élimination partielle ou totale du solvant, **caractérisé en ce que** la charge de surface des particules est augmentée par ajout d'une base ou d'un acide.

20. Substrat revêtu, dans lequel le revêtement est une composition durcie ou compactée selon l'une quelconque des revendications 1 à 12.

21. Substrat revêtu selon la revendication 20, **caractérisé en ce que** le revêtement comprend un relief de surface microstructuré.

22. Utilisation d'un substrat selon la revendication 20 ou la revendication 21 pour des applications optiques, y compris holographiques, électroniques, micromécaniques et/ou anti-salissures.
